# EUROPEAN PATENT APPLICATION

(11) **EP 1 458 115 A1**
(43) Date of publication of application: **15.09.2004**
(21) Application number: 03290586.1
(22) Date of filing: 10.03.2003
(51) Int. Cl.: H04B 3/50, H04L 25/03

(54) **Attenuator for ADSL signals**

(71) Applicant: ALCATEL, 75008 Paris (FR)
(72) Inventor: Orr, Bruce Francis, Balgowlah, New South Wales 2093 (AU); Bhagat, Priya, Carlingford, NSW 2118 (AU); Baines, Jeffrey Charles, Lane Cove, NSW 2066 (AU)
(74) Representative: Bähring, Albrecht

(57) **Abstract**

This invention (6) provides an attenuation arrangement (6) for ADSL signals fed from a remote point (11) wherein an attenuator (6) is inserted between a remotely located ADSL LT unit (7) and the line, the attenuation arrangement being for the purpose of reducing the mismatch of downstream power level of the ADSL LT unit (7) and downstream power level of other ADSL signals sharing the same cable bundle but fed from a more distant point (1,2).

## Description

### Technical Field

This invention relates to the field of ADSL line transmission systems.

In particular, it relates to the problem of injecting ADSL services from a remote cabinet (ADSL multiplexer) into a cable that is also carrying exchange fed ADSL services. Without attenuation the downstream ADSL signal from the remote cabinet will interfere with the downstream ADSL signal from the exchange due to crosstalk in the cable. The problem occurs because the injected service is typically much higher level than the ADSL signal from the exchange at the point of injection.

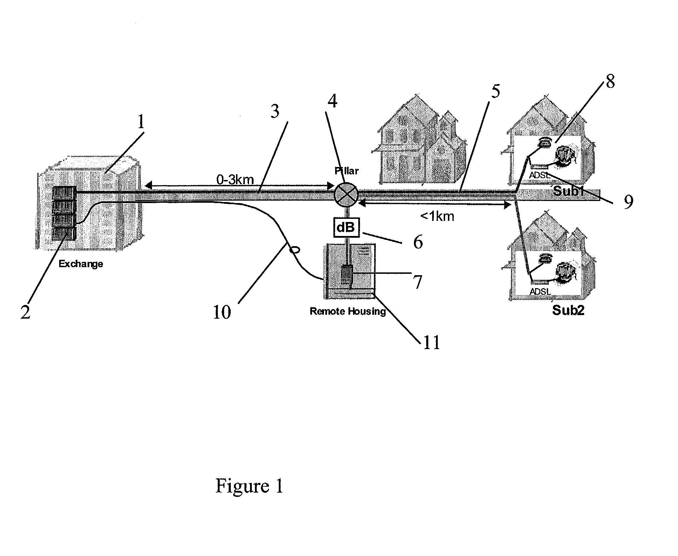

In a typical scenario shown in figure 1 the feeder cable 3 from the exchange building 1 is typically in the range 0-3km in length. The distribution cable 5 from the cable jointing means 4 is typically less than 1 km in length.

The cable jointing means 4 may in some cases be included as part of the remote multiplexer housing 11.

The attenuator arrangement 6 that is the subject of the present invention is located between the remote ADSL multiplexer (DSLAM) 7 and cable connection point 4.

The remote multiplexer 7 is typically connected to the exchange via an optical fibre 5.

The customer end equipment for a line equipped with ADSL service typically includes a phone 8 and ADSL modem 9.

### Background art

ADSL transmission is governed by standards. ANSI standard T1.413 and ITU-T standard G.992.1 cover the general transmission requirements. These standards do not however address the issue of injecting ADSL services from a remote cabinet into a cable that is also carrying exchange based ADSL services.

It may be noted that the standards do allow software control of the downstream power level, but the maximum attenuation supported is only 12dB. 12dB is not sufficient to solve the injection problem, except when the remote cabinet is located within 1 km of the exchange. It may also be noted that the 12dB flat attenuation was not intended for this purpose, but rather as means of allowing power reduction in certain countries/markets to reduce general interference problems with other services.

### Disclosure of the Invention

The present invention involves the insertion of a hardware attenuator on each ADSL line that originates from the remote point (typically a cabinet), with attenuation approximating the attenuation from the exchange to the remote point. The attenuation may either be integrated into the DSL access multiplexer (DSLAM) or located in a separate unit nearby.

Full solution of the problem requires up to 50dB of attenuation.

According to the present invention the ADSL signal from remote cabinet is attenuated to approximately the same level as the ADSL signal from the exchange (at the point of injection into the cable) to avoid interference problems.

In a preferred embodiment the attenuator is designed to provide an increasing attenuation with frequency approximating the attenuation characteristic of real cable. This attenuation is referred to as "sloped" attenuation in the following descriptions.

In the case of a sloped attenuator the risk of creating interoperability problems between client ADSL modem and DSLAM is minimized.

By contrast the use of a simple flat attenuator may risk interoperability problems. In particular the control mechanism for downstream power based on received upstream power included in ANSI T1.413 and ITU-T G.992.1 will not operate correctly if flat HW attenuation of less than 12dB is used and when the line from remote ADSL multiplexer to the customer is short. Receiver overload of the ADSL customer modem is a risk in this case.

The attenuator solution must provide good impedance matching to the line and ADSL Line termination LT in the ADSL band and must present the correct capacitive load impedance to the line/POTS splitter in the VF band.

The design must also provide good lightning/high voltage protection characteristics.

In an alternative embodiment of the invention the attenuator has a substantially flat attenuation vs frequency characteristic. Impedance matching means are provided on the line side to enable the attenuator to present a 27nF capacitance in the VF band while presenting an impedance approximating 100 ohms in the ADSL band.

### Brief Description of the Drawings

Figure 1 shows the network configuration where the injection problem occurs and the location of the added attenuator.
Figure 2 illustrates a first embodiment of the attenuator providing low attenuation
Figure 3 illustrates a second embodiment of the attenuator providing medium attenuation
Figure 4 illustrates a third embodiment of the attenuator providing high attenuation
Figure 5 shows the positioning of the attenuator in the case where the line provides both ADSL and POTS services
Figure 6 shows a flat attenuation embodiment of the attenuator

### Best mode of carrying out the invention

The invention will be described with reference to the drawings.

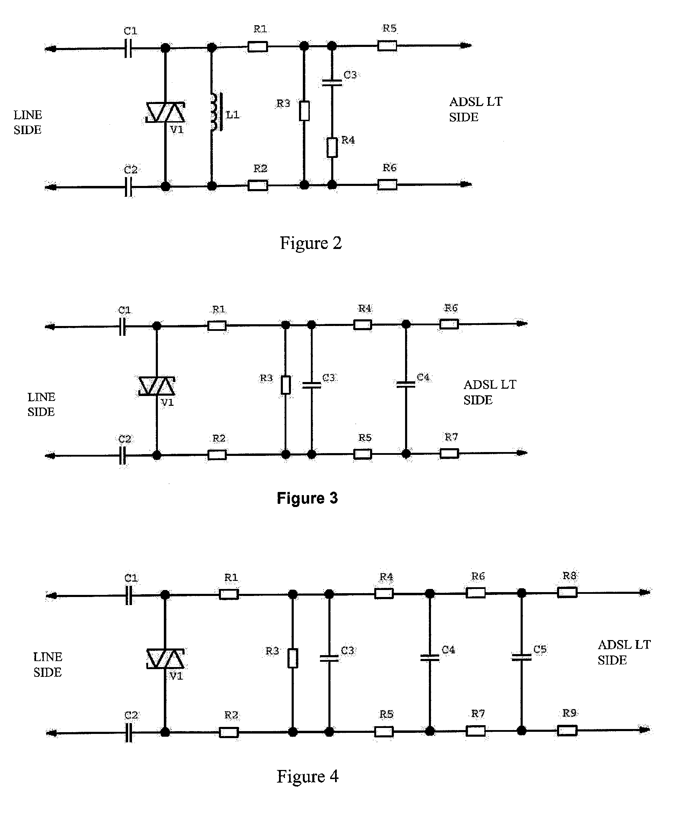

Figure 2 shows a first embodiment of the invention providing a low attenuation (typically in the range 7 to 21 dB at 300kHz). This embodiment consists of a core attenuator section R1, R2,R3, R4, R6, C3, capacitive coupling section C1, C2, optional protection device V1 and low frequency impedance/loss compensating inductor L1. The attenuator section is similar to a balanced T resistive attenuator as known in the art, but with additional components C3, R4 to achieve a sloped loss characteristic.

Capacitive coupling section C1, C2 ensures that the attenuator presents the correct capacitance (typically 27nF) on the line side so as to provide the correct capacitance load in the VF band for POTS lows pass filters typically also connected to the line. When fitted the attenuator effectively provides the same capacitive loading as the ADSL LT would provide if the attenuator were not present.

Protective device V1 would typically be a bi-directional solid state transient protector eg type TPA62 from ST Microelectronics.

Figure 3 shows a second embodiment of the invention that provides a medium amount of sloped attenuation (typically in the range 28 to 35 dB at 300kHz). The attenuator section is similar to that of figure 2, but with an additional stage R6, R7, C4 added for increased sloped attenuation. For this mid range attenuator it has been found that an inductor as in the low range attenuator of figure 1 is not typically required.

Figure 4 shows a third embodiment of the invention that provides a high range sloped attenuation (typically in the range 42 to 49 dB at 300kHz). The attenuator section is similar to that of figure 3, but with an additional stage R8, R9, C5 added for increased sloped attenuation.

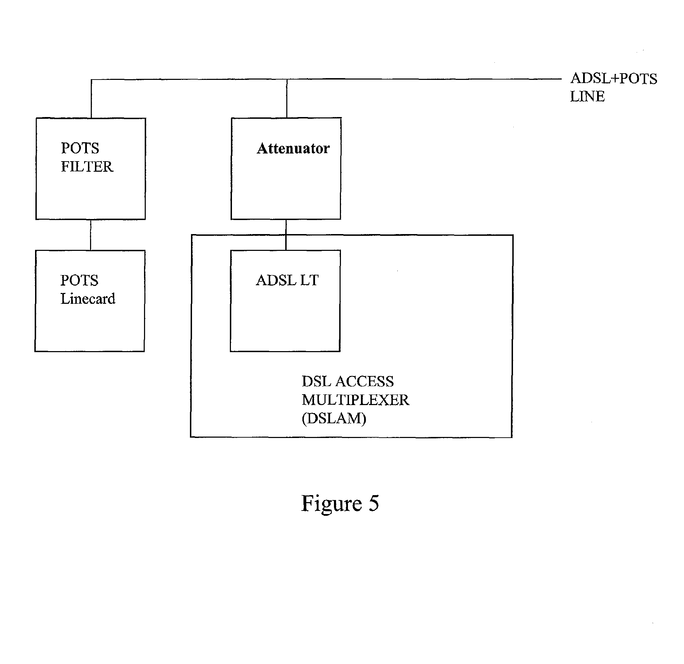

Figure 5 shows the positioning of the attenuator in the case where the line provides both ADSL and POTS services. The attenuator is inserted into the path between the ADSL LT and the line. The path between ordinary telephone (POTS) linecard via the POTS filter unit is not attenuated.

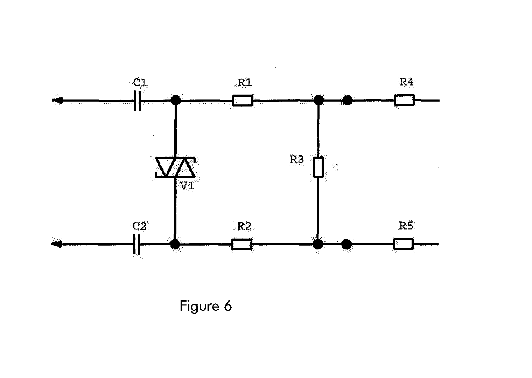

Figure 6 shows a flat attenuation version of the attenuator. This embodiment is similar to that of figure 2, but does not include the slope attenuation capacitor or inductor.

The attenuators may be physically integrated with an ADSL LT to produce a special type of LT suitable for remote application. Such remote application may be for instance inside a street side cabinet.

Alternatively the attenuators may be packaged into a separate module. Such a module may be for instance a printed circuit card that plugs into the same equipment panel as the ADSL LT.

The components that make up the attenuator arrangement would typically be mounted on a printed board assembly (PBA). In a typical embodiment of the invention multiple channel of attenuation would be mounted on the same PBA. In a preferred embodiment a mixture of through hole mounted components (large capacitors, inductors) and surface mounted components is used.

The design of said PBA would be typically such as maintain good isolation between channels and between input and output of given channels. In implementing this invention it has been found advantageous to use a somewhat linear layout of the multiple stages of the attenuator so as to maximise input to output isolation. It has also been found necessary to ensure that tracks leading to inputs and outputs (line side, ADSL LT side) are not in close proximity at any point.

Because the attenuators described herein require no operating power the possible location options are increased and they do not necessarily need to be located with the ADSL LT. Alternatively attenuators could be inserted in the cable joining the ADSL LT to the distribution cable eg. in a sealed underground enclosure. Alternatively, the attenuators could be located at the cable jointing enclosure (either inside the enclosure or nearby).

## Claims

1. Attenuation arrangement for ADSL signals wherein an attenuator is inserted between a remotely located ADSL line termination unit and the line, said attenuation arrangement being for the purpose of reducing the mismatch of downstream power level of said ADSL LT unit and downstream power level of other ADSL signals sharing the same cable bundle but fed from a more distant point.

2. An attenuation arrangement as in claim 1 wherein the attenuator has a sloped attenuation versus frequency characteristic to approximate the characteristic of actual telephone lines.

3. An attenuation arrangement as in claim 1 wherein the attenuator has a flat characteristic.

4. An attenuation arrangement as in claim 2 or claim 3 wherein the attenuator consists of a capacitive coupling part and an attenuator part

5. An attenuation arrangement as in claim 4 wherein the attenuator also includes a protection part located between said capacitive coupling part and said attenuator part.

6. An attenuation arrangement as in any of the preceding claims which is integrated with an ADSL LT unit.

7. An attenuation arrangement as in any of the preceding claims which is co-located with an ADSL LT unit.
